# EUROPÄISCHE PATENTSCHRIFT

(11) **EP 1 697 781 B1**
(45) Veröffentlichungstag und Bekanntmachung des Hinweises auf die Patenterteilung: **04.02.2009**
(21) Anmeldenummer: 04766844.7
(22) Anmeldetag: 23.09.2004
(51) Int. Cl.: G02B 21/00, G02B 21/06

(54) **MIKROSKOP MIT EVANESZENTER BELEUCHTUNG**
MICROSCOPE WITH EVANESCENT ILLUMINATION
MICROSCOPE AVEC ECLAIRAGE EVANESCENT

(30) Priorität: 25.09.2003 DE 10344410; 10.09.2004 DE 102004044308
(43) Veröffentlichungstag der Anmeldung: 06.09.2006
(73) Patentinhaber: Leica Microsystems CMS GmbH, 35578 Wetzlar (DE)
(72) Erfinder: ULRICH, Heinrich, 69121 Heidelberg (DE); KNEBEL, Werner, 76709 Kronau (DE); MÖLLMANN, Kyra, 67705 Trippstadt (DE); EUTENEUER, Peter, 35633 Lahnau (DE)
(74) Vertreter: Naumann, Ulrich
(86) Internationale Anmeldenummer: PCT/EP2004/052287
(87) Internationale Veröffentlichungsnummer: WO 2005/031429

(56) Entgegenhaltungen:
- WO-A-03/023483
- DE-A- 3 409 657
- US-A1- 2003 058 530
- US-A1- 2003 086 163
- US-B1- 6 255 642

## Beschreibung

Die Erfindung betrifft ein Mikroskop, mit einem Objektiv, mit einer Lichtquelle, die ein Beleuchtungslichtstrahlenbündel zur evaneszenten Beleuchtung einer Probe erzeugt, mit einer Optik zur Fokussierung des Beleuchtungslichtstrahlenbündels derart, dass das Beleuchtungslichtstrahlenbündel in der Ebene der Objektivpupille einen Fokus aufweist, und mit einem Einstellmittel, das eine in Strahlengang des Beleuchtungslichtstrahlenbündels angeordnete einstellbare Strahlablenkeinrichtung umfasst.

Aus US 2002/0097489 A1 ist ein Mikroskop mit evaneszenter Beleuchtung einer Probe bekannt. Das Mikroskop beinhaltet eine Weißlichtquelle, deren Licht über eine Schlitzblende durch das Mikroskopobjektiv hindurch in den eine Probe tragenden Objektträger zur evaneszenten Beleuchtung eingekoppelt wird. Das Beleuchtungslicht pflanzt sich in dem Objektträger durch totalinterne Reflektion fort, wobei die Beleuchtung der Probe nur im Bereich des aus dem Objektträger herausragenden evaneszenten Feldes erfolgt. Mikroskope dieser Art sind unter dem Begriff TIRFM (Total Internal Reflection Fluorescent Microscope) bekannt.

Die z-Auflösung von TIRF-Mikroskopen ist aufgrund des nur ca. 100 nm in die Probe ragenden evaneszenten Feldes außerordentlich gut.

Aus DE 101 08 796 A1 ist ein hochaperturiges Objektiv, insbesondere für TIRF-Anwendungen bekannt. Das Objektiv besteht aus einer ersten Linse mit einer positiven Brechkraft, einer zweiten Linse mit negativer Brechkraft, wobei das Brennweitenverhältnis zwischen den beiden Linsen im Bereich von - 0,4 und - 0,1 liegt und die Gesamtbrechkraft größer Null ist. Ferner beinhaltet das Objektiv zwei positive Linsen, deren Verhäftnisdurchmesser zur Brennweite größer 0,3 und kleiner 0,6 ist. Ferner beinhaltet das Objektiv eine Negativlinse und einer Sammellinse, wobei die Negativlinse der Frontgruppe zugewandt ist und das Brennweitenverhältnis der Negativlinse und der Sammellinse zwischen - 0,5 und - 2 liegt.

Aus DE 102 17 098 A1 ist eine Auflichtbeleuchtungsanordnung für die TIRF-Mikroskopie bekannt. Die Auflichtbeleuchtungsanordnung beinhaltet eine Beleuchtungsquelle, die im Betrieb ein polarisiertes Beleuchtungsstrahlenbündel abgibt, das unter einem Winkel zur optischen Achse propagiert und eine Umlenkeinrichtung, die das Beleuchtungsstrahlenbündel umlenkt und parallel zur optischen Achse in das Objektiv einkoppelt. Es ist bei dieser Auflichtbeleuchtungsanordnung vorgesehen, dass das von der Beleuchtungsquelle abgegebene Beleuchtungsstrahlenbündel s- und p-Polarisationsrichtungen mit einer Phasendifferenz aufweist und die Umlenkeinrichtung das Beleuchtungsstrahlenbündel x-mal reflektiert, wobei x = (n x 180° - d)/60°.

Aus DE 101 43 481 A1 ist ein Mikroskop zur TIRM (Total Internal Reflection Microscopy) bekannt. Das Mikroskop weist ein Mikroskopgehäuse und ein Objektiv auf. Das von einer Beleuchtungseinrichtung ausgehende Beleuchtungslicht kann über einen in das Mikroskopgehäuse einschiebbaren Adapter eingekoppelt werden.

Aus US 2004/0001253 A1 ist ein Mikroskop mit einem optischen Beleuchtungssystem, das ein einfaches Umschalten zwischen evaneszenter Beleuchtung und Reflektionsbeleuchtung ermöglicht. Das Beleuchtungssystem beinhaltet eine Laserlichtquelle, deren Licht in eine optische Faser eingekoppelt wird. Ferner ist eine Auskoppeloptik vorgesehen, die das aus der Faser austretende Licht in einen hinteren Brennpunkt des Mikroskopobjektivs fokussiert. Die optische Faser ist in einer Ebene senkrecht zur optischen Achse des Mikroskopobjektivs verschiebbar.

Aus DE 102 29 935 A1 ist eine Einrichtung zur Einkopplung von Licht in einem Mikroskop bekannt. Dabei wird in der Leuchtfeldblendenebene durch eine als Schieber ausgeführte Lichtleitfaser-Einkopplung Laserlicht auf das Präparat gerichtet. Die Erfindung ist insbesondere für das TIRF-Verfahren geeignet.

In der Rastermikroskopie wird eine Probe mit einem Lichtstrahl beleuchtet, um das von der Probe emittierte Detektionslicht, als Reflexions- oder Fluoreszenzlicht, zu beobachten. Der Fokus eines Beleuchtungslichtstrahlenbündels wird mit Hilfe einer steuerbaren Strahlablenkeinrichtung, im Allgemeinen durch Verkippen zweier Spiegel, in einer Probenebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Detektionslichtes wird in Abhängigkeit von der Position des Abtaststrahles gemessen. Üblicherweise werden die Stellelemente mit Sensoren zur Ermittlung der aktuellen Spiegelstellung ausgerüstet. Speziell in der konfokalen Rastermikroskopie wird ein Objekt mit dem Fokus eines Lichtstrahls in drei Dimensionen abgetastet.

Ein konfokales Rastermikroskop umfasst im Allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Diese Detektionsanordnung wird Descan-Anordnung genannt. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts mit dem Fokus des Beleuchtungslichtstrahlenbündels zu einem dreidimensionalen Bild führt. Meist wird ein dreidimensionales Bild durch schichtweise Bilddatennahme erzielt.

Aus der WO 03/023483 A2 ist ein Mikroskop mit evaneszenter Probenbeleuchtung bekannt, welches eine im Strahlengang des Beleuchtungslichts angeordnete einstellbare Strahlablenkeinrichtung aufweist. Die Strahlablenkeinrichtung ist als Prisma ausgeführt. Das Prisma ist sowohl orthogonal zur optischen Achse des Objektivs als auch parallel zu dieser Achse verschiebbar, wodurch sich die räumliche Position des Fokus des Beleuchtungslichts innerhalb der Ebene der Objektivpupille verändern lässt.

Die US 2003/0058530 A1 offenbart ein Mikroskop, das zwischen verschiedenen Beobachtungsmodi umschaltbar ist. Das Mikroskop kann u. a. im TIRF-Modus betrieben werden, wobei das Beleuchtungslichtstrahlenbündel über eine Abbildungslinse und einen dichroitischen Spiegel derart in das Mikroskopobjektiv geführt wird, dass das Beleuchtungslichtstrahlenbündel in der Ebene der Objektivpupille einen Fokus aufweist. Das Ende einer optischen Lichtleitfaser, aus der das Beleuchtungslichtstrahlenbündel austritt, ist in einer U-förmigen Halterung festgelegt. Mittels einer Einstellschraube kann die Position der Lichtleitfaser und damit der Auftreffpunkt des Beleuchtungslichts auf dem dichroitischen Spiegel und somit letztlich auch die Eindringtiefe des Beleuchtungslichts in die Probe variabel eingestellt werden.

Die US 6,255,642 B1 zeigt ein Mikroskopsystem zur Bilderzeugung mittels der sogenannten "standing wave total internal reflection". Das Beleuchtungslichtstrahlenbündel wird mittels mehrerer optischer Elemente in einen im Wesentlichen transparenten optisch dichten Block geführt. Der Einfallswinkel ist dabei so gewählt, dass beim Austritt aus dem transparenten optischen Block eine Totalreflexion auftritt, so dass sich in der auf dem transparenten optischen Block positionierten Probe eine stehende evaneszente Welle ausbildet.

Aus der US 2003/00086163 A1 ist ein TIRF-Mikroskop bekannt, bei dem das über eine Lichtleitfaser bereitgestellte Beleuchtungslicht mittels eines hochreflektierenden Spiegels und mittels eines zusätzlichen dichroitischen Spiegels in das Objektiv geführt wird. Die Lichtleitfaser ist verschiebbar angeordnet und kann so justiert werden, dass das austretende Beleuchtungslicht beim Übergang von der Objektivlinse in die Probe total reflektiert wird.

Aus der DE 34 09 657 A1 ist eine Dunkelfeldbeleuchtungseinrichtung für Mikroskope bekannt, wobei zwischen der Lichtquelle und einem das Mikroskopobjektiv ringförmig umgebenden Auflichtkondensator eine Sektorenblende vorgesehen ist, die eine kontinuierliche bzw. quasi kontinuierliche Ausblendung einzelner Sektoren des ringförmigen Beleuchtungsstrahlenbündels erlaubt.

Es ist die Aufgabe der vorliegenden Erfindung ein Mikroskop anzugeben, das eine variable Einstellung der Eindringtiefe von Beleuchtungslicht bei evaneszenter Beleuchtung einer Probe ermöglicht.

Diese Aufgabe wird durch ein Mikroskop gemäß Anspruch 1 gelöst, das dadurch gekennzeichnet ist, dass die Strahlablenkeinrichtung auf der dem Objektiv abgewandten Seite der Optik zur Fokussierung des Beleuchtungslichtslichtrahlenbündels angeordnet ist und mindestens einen drehbar oder kippbar ausgeführten Spiegel und/oder Prisma zur Veränderung der räumlichen Position des Fokus innerhalb der Ebene der Objektivpupille umfasst.

Erfindungsgemäß wurde erkannt, dass die Eindringtiefe eines evaneszenten Beleuchtungsfeldes in eine Probe von dem Winkel, unter dem die Totalreflektion an der Deckglasgrenzfläche bzw. an der Objektträgergrenzfläche stattfindet, abhängt. Dieser Winkel ist direkt korreliert mit dem Winkel relativ zur optischen Achse, unter dem das für die evaneszente Proben beleuchtung vorgesehene Beleuchtungslichtstrahlenbündel das Objektiv durch die Frontlinse verlässt. Dieser Winkel wiederum hängt davon ab, mit welchem Abstand zur optischen Achse das Beleuchtungslichtstrahlenbündel durch die hintere Brennebene des Objektivs (Pupille) verläuft. Um ein weitgehend paralleles Beleuchtungslichtstrahlenbündel für die evaneszente Probenbeleuchtung zur Verfügung zu haben, muss das Beleuchtungslichtstrahlenbündel in der hinteren Brennebene des Objektivs einen Fokus aufweisen. Letztlich bestimmt der Abstand des Fokus zur optischen Achse des Objektivs die besagten Winkel und damit die Eindringtiefe des evaneszenten Feldes in die zu untersuchende Probe.

Weiter erfindungsgemäß ist erkannt worden, dass sich eine besonders flexible Lichteinkopplung realisieren lässt, wenn die Strahlablenkeinrichtung drehbar oder kippbar ausgeführte Elemente wie Spiegel und/oder Prisma umfasst.

Erfindungsgemäß wird dazu die Strahlablenkeinrichtung auf der dem Objektiv abgewandten Seite der Optik zur Fokussierung des Beleuchtungsstrahlenbündels angeordnet. In erfindungsgemäßer Weise ist erkannt worden, dass es bei einer solchen Anordnung möglich ist, durch Drehen oder Kippen des Spiegels und/oder Prismas eine nahezu beliebige Veränderung der räumlichen Position des Fokus innerhalb der Ebene der Objektivpupille zu erzielen. Im Hinblick auf die Beleuchtung der Probe ist somit ein hohes Maß an Flexibilität und Variabilität gewährleistet.

In einer bevorzugten Ausgestaltungsform des erfindungsgemäßen Mikroskops beinhaltet die Strahlablenkeinrichtung zumindest einen Galvanometerspiegel. Um den Fokus an jede beliebige Stelle innerhalb der Objektivpupille positionieren zu können, beinhaltet die Strahlablenkeinrichtung vorzugsweise zwei Galvanometerspiegel, die Ablenkungen des Beleuchtungslichtstrahlenbündels in unterschiedliche laterale Richtungen (z.B. x- und y-Richtung) bewirken. Die Strahlablenkeinrichtung kann auch dreh- oder kippbare Prismen und/oder dreh- oder kippbare Spiegel beinhalten. Es ist auch denkbar, akusto- oder elektrooptisch wirkende Ablenkelemente zu verwenden.

In einer Ausgestaltungsvariante umfasst das Einstellmittel eine zumindest teilweise verschiebbar angeordnete Lichtleitfaser. In dieser Variante sind vorzugsweise mechanische Stellmittel vorgesehen, die es erlauben, das Austrittsende der Lichtleitfaser präzise innerhalb der Objektivpupille zu positionieren Das Beleuchtungslichtstrahlenbündel wird bei dieser Ausgestaltungsvariante auf das Eintrittsende der Lichtleitfaser fokussiert, durch die Lichtleitfaser transportiert und weist am Auskoppelende das in der Objektivpupille positioniert ist, aufgrund des geringen Durchmessers üblicher Lichtleitfasern de-facto wieder einen Fokus auf.

Wie bereits erläutert, ist es zur Einstellung der Eindringtiefe des evaneszenten Feldes in dem Probenbereich von besonderer Wichtigkeit den Abstand des Fokus des Beleuchtungslichtstrahlenbündels in der Objektivpupille relativ zur optischen Achse des Objektivs einzustellen.

Für besondere Anwendungen kann es von Vorteil sein, das Einstellmittel derart anzusteuern, dass der Fokus eine auswählbare Bahnkurve innerhalb der Objektivpupillenebene abfährt. Hierdurch kann beispielsweise eine besonders homogene Beleuchtung erzielt werden. Für besondere Experimente ist es möglich, mit dieser Variante einen ständigen Wechsel der Polarisationsrichtung zu bewirken. In einer besonders bevorzugten Ausgestaltungsvariante ist die Bahnkurve eine Kreisbahn. Ganz besonders bevorzugt ist eine Ausgestaltungsvariante, bei der die Bahnkurve eine Kreisbahn ist, deren Mittelpunkt auf der optischen Achse des Objektivs liegt. In dieser Variante bleibt die Eindringtiefe während des Kreisens des Fokus auf der Bahnkurve konstant, wobei jedoch das aus dem Objektiv austretende Beleuchtungslichtstrahlenbündel kontinuierlich aus verschiedenen Richtungen in das Deckglas bzw. in den Objektträger eingekoppelt wird. Es ist auch möglich, gezielt unterschiedliche Einkoppelrichtungen zu wählen, um die resultierenden ggf. unterschiedlichen Abbilder der Probe zu vergleichen.

In einer sehr bevorzugten Variante ist eine Ausgleichsoptik vorgesehen, um Unebenheiten der Objektivpupillenebene zu kompensieren.

Vorzugsweise ist das Mikroskopobjektiv austauschbar (z.B. Objektivrevolver), wobei eine Anpassungsoptik zur Anpassung der unterschiedlichen Pupillenlagen unterschiedlicher Objektive vorgesehen ist. Die jeweiligen Abstände von der Fokalebene zur hinteren Brennebene können sich von Objektiv zu Objektiv unterscheiden, was zu Problemen führen kann, da um eine optimale evaneszente Probenbeleuchtung zu erreichen, der Fokus des Beleuchtungslichtstrahlenbündels einigermaßen exakt in der Objektivpupille liegen sollte. Besagte Anpassungsoptik, bei der es sich beispielsweise um eine Zoomoptik oder mehrere beispielsweise auf einem Revolver angeordnete austauschbare Optiken handeln kann, gleicht diese Abstandsdifferenzen aus.

In einer bevorzugten Ausgestaltungsform des erfindungsgemäßen Mikroskops ist eine Lichtfalle zur Beseitigung von ungenutzten Beleuchtungslicht vorgesehen. Nur ein Teil des in das Deckglas bzw. in den Objektträger eingekoppelten Beleuchtungslichtes beleuchtet tatsächlich die Probe evaneszent. Das Licht, das nach mehreren Totalreflektionen wieder aus dem Deckglas bzw. aus dem Objektträger austritt, kann zurück in das Mikroskop gelangen und zu Störungen bei der Bildaufnahme (beispielsweise durch Streulichtverursachung) führen. Dies wird erfindungsgemäß durch eine geeignet angeordnete Lichtfalle vermieden.

In einer besonders bevorzugten Ausgestaltungsvariante des Mikroskops ist ein Umschaltmittel zum Umschalten zwischen klassischer Auflichtbeleuchtung und evaneszenter Probenbeleuchtung vorgesehen. Bei dem Umschaltmittel kann es sich beispielsweise um einen Klappspiegel handeln.

Vorzugsweise ist der Lichtkegel insbesondere zur Änderung des Azimuts variierbar. Es kann eine Blendenoptik, beispielsweise eine in der Zwischenbildebene angeordnete Irisoptik vorgesehen sein, um den Durchmesser des aus dem Mikroskopobjektiv austretenden Beleuchtungslichtstrahlenbündels einzustellen.

In einer besonderen Ausgestaltungsvariante ist zur Bildaufnahme eine Kamera vorgesehen. Die Kamera kann in einer besonders bevorzugten Variante als Farbkamera, als CCD-Kamera ausgestaltet sein.

Vorzugsweise weist das Objektiv eine numerische Apertur auf, die größer als 1,4 insbesondere größer als 1,45, insbesondere größer 1,6 ist. Vorzugsweise beträgt die numerische Apertur des Objektivs 1,45 oder 1,65.

In einer besonderen Variante sind zumindest die Lichtquelle und das Einstellmittel zu einem Beleuchtungsmodul zusammengefasst, das vorzugsweise an ein Mikroskop und/oder an ein Mikroskopstativ ankoppelbar ist. Ein Beleuchtungsmodul bietet den Vorteil, dass es auch zur Nachrüstung an ein bereits bestehendes Mikroskop oder Mikroskopstativ ankoppelbar ist.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: ein erfindungsgemäßes Mikroskop,
- Fig. 2: ein weiteres erfindungsgemäßes Mikroskop,
- Fig. 3: ein Beleuchtungsmodul, das an ein Mikroskop angekoppelt ist,
- Fig. 4: ein Mikroskop mit einem Beleuchtungsmodul, und
- Fig. 5: ein anderes erfindungsgemäßes Mikroskop

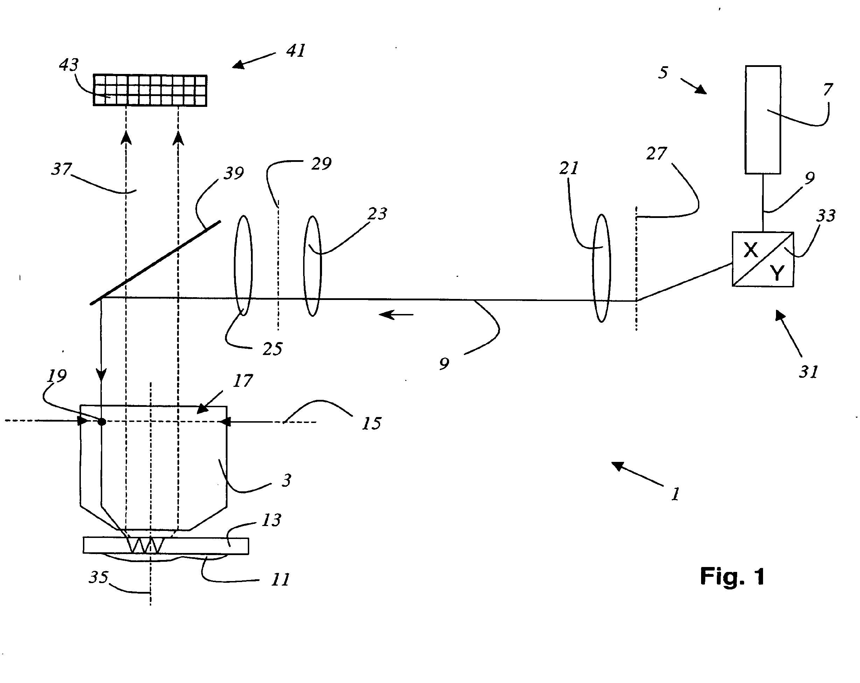

Fig. 1 zeigt ein erfindungsgemäßes Mikroskop 1 mit einem Objektiv 3 und einer Lichtquelle 5, die als Laser 7 ausgebildet ist und die ein Beleuchtungslichtstrahlenbündel 9 erzeugt. Das von der Lichtquelle 5 ausgehende Beleuchtungslichtstrahlenbündel 9 dient zur evaneszenten Beleuchtung einer Probe 11, die an einem Objektträger 13 angelagert ist. Das Beleuchtungslichtstrahlenbündel 9 weist in der Ebene 15 der Objektivpupille 17 einen durch einen Punkt dargestellten Fokus 19 auf. Im Strahlengang des Mikroskops 1 sind mehrere optische Elemente zur Strahlführung und Strahlformung angeordnet. So gibt es beispielsweise eine erste Optik 21, eine zweite Optik 23 und eine Optik 25, die eine erste Zwischenbildebene 27 und eine zweite Zwischenbildebene 29 erzeugen. Die räumliche Position des Fokus 19 innerhalb der Ebene 15 der Objektivpupille 17 ist mit Hilfe eines Einstellmittels 31, dass eine einstellbare Strahlablenksinrichtung 33 umfasst, veränderbar. Die einstellbare Strahlablenkeinrichtung 33 beinhaltet einen nicht dargestellten kardanisch aufgehängten Drehspiegel. Mit Hilfe des Einstellmittels 31 kann der Abstand des Fokus 19 zur optischen Achse 35 des Objektivs 3 eingestellt werden und damit die Eindringtiefe des Beleuchtungslichtstrahlenbündels in die Probe 11 variiert werden. Das von der Probe 11 ausgehende Detektionslicht 37 gelangt durch das Objektiv 3 sowie durch den Strahlteiler 39, der das Beleuchtungslichtstrahlenbandel 9 zum Objektiv 3 lenkt, hindurch zu einem Detektor 41, der als CCD-Kamera ausgebildet ist. Der Strahlteiler 39 ist als dichroitischer Strahlteiler ausgebildet und so ausgelegt, dass Licht der Wellenlänge des Beleuchtungslichtstrahlenbündels reflektiert wird, während Licht der Wellenlänge des Detektionslichts 37 passieren kann.

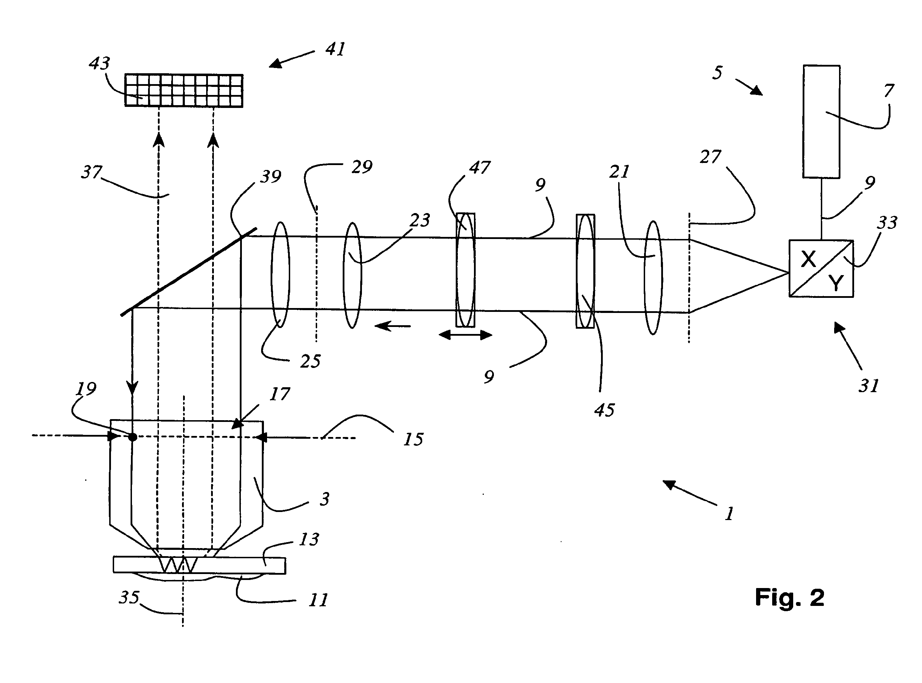

Fig. 2 zeigt eine Ausgestaltungsvariante eines erfindungsgemäßen Mikroskops 1. In dieser Variante wird das Beleuchtungslichtstrahlenbündel 9 von dem Einstellmittel 31 kontinuierlich auf einer Kreisbahn 43 in der Objektivpupillenebene geführt, so dass das Beleuchtungslichtstrahlenbündel 9 stets unter dem selben Winkel zur optischen Achse 35 des Objektivs 3 auf den Objektträger 13 fällt, jedoch mit kontinuierlich wechselnder Einfallsrichtung. Es ist außerdem eine Ausgleichsoptik 45 zur Kompensation von Unebenheiten der Objektivpupillenebene 15 vorgesehen. Ferner ist eine Anpassungsoptik 47 vorgesehen, die eine Anpassung an unterschiedliche Pupillenlagen unterschiedlicher Objektive ermöglicht. Zu diesem Zweck ist die Anpassungsoptik axial verschiebbar ausgebildet.

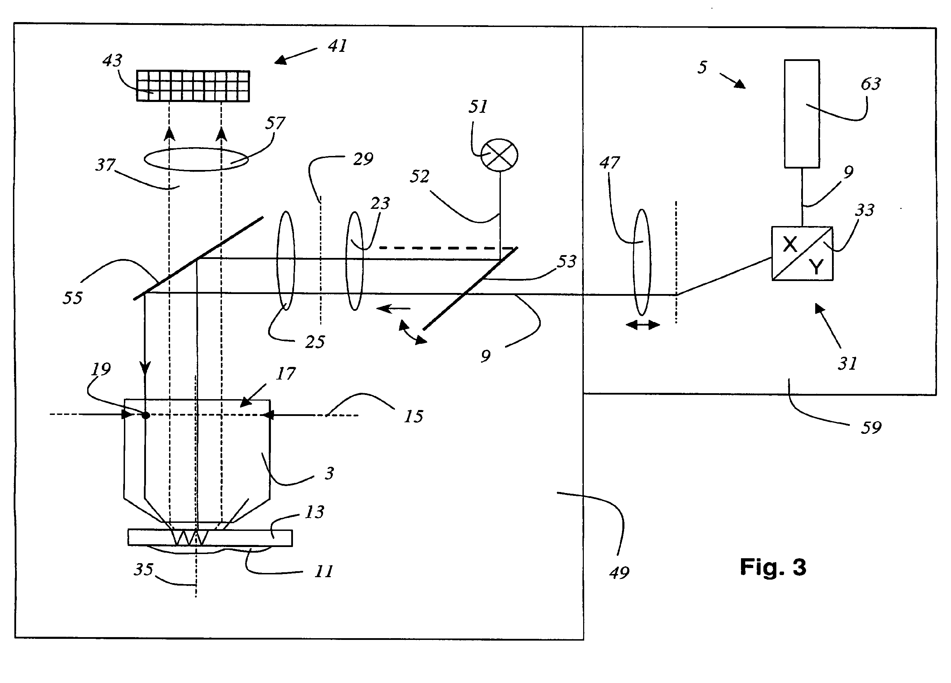

Fig. 3 zeigt ein klassisches Auflichtmikroskop 49 mit einer Auflichtbeleuchtungslichtquelle 51, deren Licht 52 über einen Klappspiegel 53 sowie über einen Auflichtstrahlteiler 55 durch das Objektiv 3 hindurch auf die Probe 15 gelenkt wird. Das von der Probe ausgehende Detektionslicht 37 gelangt durch die Tubusoptik 57 zur Kamera 43. An das Auflichtmikroskop 49 ist ein Beleuchtungsmodul 59 mit einer Lichtquelle 61, die als Mehrlinienlaser 63 ausgeführt ist und mit einem Einstellmittel 31 sowie mit einer Anpassungsoptik 47 angekoppelt. Zur Erzielung einer evaneszenten Probenbeleuchtung wird der Klappspiegel 53 in die gestrichelt eingezeichnete Position geklappt. Hierdurch wird der Strahlengang freigegeben für das Beleuchtungslichtstrahlenbündel 9, das ausgehend von dem Mehrlinienlaser 63 über die Strahlablenkeinrichtung 33 sowie durch die Anpassungsoptik 47 in das Mikroskop 49 gelangt. Das Beleuchtungslichtstrahlenbündel 9 weist in der Ebene 15 der Objektivpupille 17 einen Fokus 19 auf, der in seiner Position mit Hilfe des Einstellmittels 31 variierbar ist.

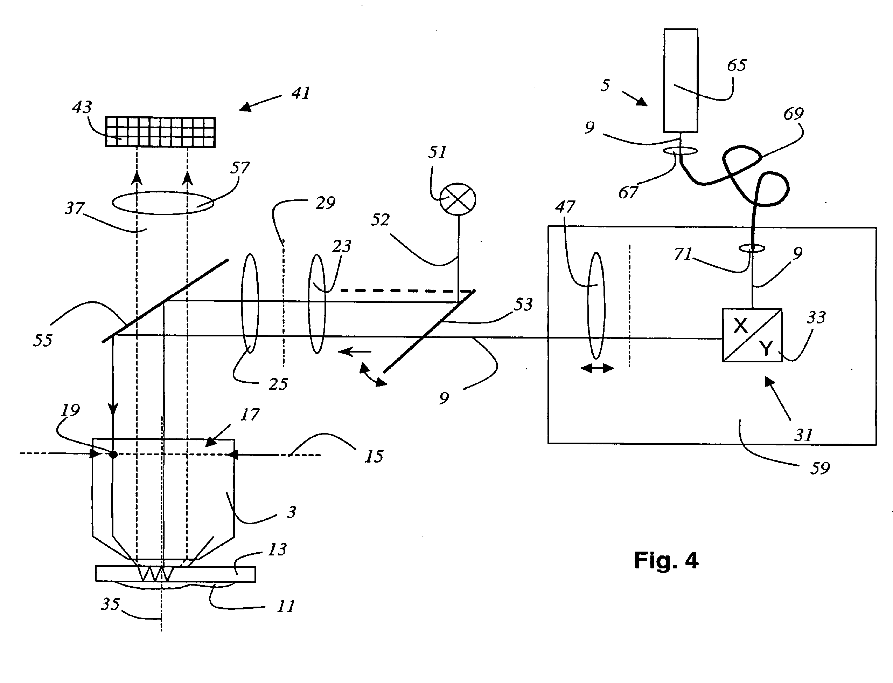

Fig. 4 zeigt ein Mikroskop mit einem Beleuchtungsmodul 59. Das Beleuchtungsmodul 59 beinhaltet eine Lichtquelle 5 mit einem Halbleiterlaser 65, der ein Beleuchtungslichtstrahlenbündel 9 emittiert. Das Beleuchtungslichtstrahlenbündel 9 wird von der Einkoppeloptik 67 in eine Lichtleitfaser 69 eingekoppelt, von der Auskoppeloptik 71 ausgekoppelt und gelangt schließlich zum Einstellmittel 31, dass das Beleuchtungslichtstrahtenbündel 9 auf den in den vorherigen Figuren bereits erläuterten Lichtweg innerhalb des Mikroskops lenkt.

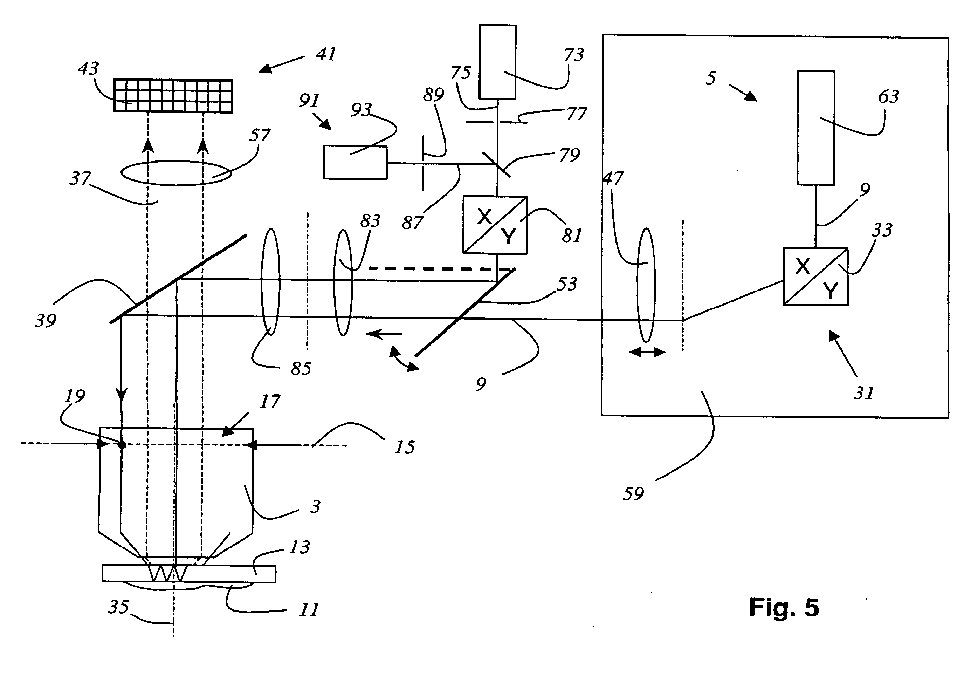

Fig. 5 zeigt eine Ausgestaltungsvariante, bei der das Beleuchtungsmodul 59, das eine Lichtquelle 5 und ein Einstellmittel 31 sowie eine Ausgleichsoptik 47 umfasst, an ein konfokales Rastermikroskop angekoppelt ist. Zur evaneszenten Probenbeleuchtung wird der Klappspiegel 53 in die gestrichelt eingezeichnete Position geklappt und damit der Strahlengang für die evaneszenten Proben beleuchtung (wie zuvor bereits erläutert) freigegeben. Wenn der Klappspiegel in die ausgezogen eingezeichnete Position geklappt ist, gelangt das von einer weiteren Lichtquelle 73 ausgehende Beleuchtungslicht 75 durch die Beleuchtungslichtblende 77 sowie durch den Hauptstrahlteiler 79 hindurch zur weiteren Strahlablenkeinrichtung 81, die das Beleuchtungslicht 75 durch die Scanoptik 83, sowie durch die Tubusoptik 85 sowie über den Strahlteiler 39 und durch das Objektiv 3 über bzw. durch die Probe 15 führt. Das von der Probe ausgehende Detektionslicht 87 gelangt auf dem selben Lichtweg, nämlich durch das Objektiv. 3, den Strahlteiler 39, die Scanoptik 85 und die Tubusoptik 83 zurück zum Klappspiegel 53; von diesem weiter zur weiteren Strahlablenkeinrichtung 81 zum Hauptstrahlteiler 79, der das Detektionslicht 87 durch die Detektionslochblende 89 zum Detektor 91, der als Multibanddetektor 93 ausgebildet ist, führt. In dieser Ausgestaltungsvariante des erfindungsgemäßen Mikroskops kann sowohl eine evaneszente Probenbeleuchtung als auch ein konfokales Abrastem der Probe erfolgen. Bei entsprechender Ausgestaltung des Klappspiegels 53 (beispielsweise als dichroitischer Strahlteiler) können die Funktionen auch simultan zur Anwendung kommen.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Mikroskop
- 3: Objektiv
- 5: Lichtquelle
- 7: Laser
- 9: Beleurhtungslichtstrahlenbündel
- 11: Probe
- 13: Objektträger
- 15: Ebene der Objektivpupille
- 17: Objektivpupille
- 19: Fokus
- 21: erste Optik
- 23: zweite Optik
- 25: dritte Optik
- 27: erste Zwischenbildebene
- 29: zweite Zwischenbildebene
- 31: Einstellmittels
- 33: Strahlablenkeinrichtung
- 35: optische Achse
- 37: Detektionslicht
- 39: Strahlteiler
- 41: Detektor
- 43: Kreisbahn
- 45: Ausgleichsoptik
- 47: Anpassungsoptik
- 499: Auflichtmikroskop
- 51: Auflichtbeleuchtungslichtquelle
- 53: Klappspiegel
- 55: Auflichtstrahlteiler
- 57: Tubusoptik
- 59: Beleuchtungsmodul
- 61: Lichtquelle
- 63: Mehrlinienlaser
- 65: Halbleiterlaser
- 67: Einkoppeloptik
- 69: Lichtleitfaser
- 71: Auskoppeloptik
- 73: Lichtquelle
- 75: Beleuchtungslicht
- 77: Beleuchtungslichtblende
- 79: Hauptstrahlteiler
- 81: Strahlablenkeinrichtung
- 83: Scanoptik
- 85: Tubusoptik
- 87: Detektionslicht
- 89: Detektsonslochblende
- 91: Detektor
- 93: Multibanddetektor

## Patentansprüche

1. Mikroskop, mit einem Objektiv (3), mit einer Lichtquelle (5), die ein Beleuchtungslichtstrahlenbündel (9) zur evaneszenten Beleuchtung einer Probe (11) erzeugt, mit einer Optik (21, 23, 25, 83, 85) zur Fokussierung des Beleuchtungslichtstrahlenbündels (9) derart, dass das Beleuchtungslichtstrahlenbündel (9) in der Ebene der Objektivpupille (15) einen Fokus (19) aufweist, und mit einem Einstellmittel (31), das eine in Strahlengang des Beleuchtungslichtstrahlenbündels (9) angeordnete einstellbare Strahlablenkeinrichtung (33) umfasst, **dadurch gekennzeichnet, dass** die Strahlablenkeinrichtung (33) auf der dem Objektiv (3) abgewandten Seite der Optik (21, 23, 25, 83, 85) zur Fokussierung des Beleuchtungslichtstrahlenbündels (9) angeordnet ist und mindestens einen drehbar oder kippbar ausgeführten Spiegel und/oder Prisma zur Veränderung der räumlichen Position des Fokus innerhalb der Ebene der Objektivpupille (15) umfasst.

2. Mikroskop nach Anspruch 1, **dadurch gekennzeichnet, dass** die Strahlablenkeinrichtung (33) zumindest einen Galvanometerspiegel beinhaltet.

3. Mikroskop nach Anspruch 1 oder 2, **dadurch gekennzeichnet, dass** das Einstellmittel (31) eine zumindest teilweise verschiebbar angeordnete Lichtleitfaser (69) umfasst.

4. Mikroskop nach einem der Ansprüche 1 bis 3, **dadurch gekennzeichnet, dass** der Abstand des Fokus (19) des Beleuchtungslichtstrahlenbündels (9) zur optischen Achse (35) des Objektivs (3) einstellbar ist.

5. Mikroskop nach einem der Ansprüche 1 bis 4, **dadurch gekennzeichnet, dass** das Einstellmittel (31) derart ansteuerbar ist, das der Fokus (19) kontinuierlich eine auswählbare Bahnkurve innerhalb der Ebene der Objektivpupille (15) abfährt.

6. Mikroskop nach Anspruch 5, **dadurch gekennzeichnet, dass** die Bahnkurve eine Kreisbahn ist.

7. Mikroskop nach einem der Ansprüche 1 bis 6, **dadurch gekennzeichnet, dass** eine Ausgleichsoptik (45) zur Kompensation von Unebenheiten der Objektivpupilleebene (15) vorgesehen ist.

8. Mikroskop nach einem der Ansprüche 1 bis 7, **dadurch gekennzeichnet, dass** das Mikroskopobjektiv (3) austauschbar ist und dass eine Anpassungsoptik (47) zur Anpassung an unterschiedliche Pupillenlagen vorgesehen ist.

9. Mikroskop nach einem der Ansprüche 1 bis 8, **dadurch gekennzeichnet, dass** eine Lichtfalle zur Beseitigung von ungenutztem Beleuchtungslicht vorgesehen ist.

10. Mikroskop nach einem der Ansprüche 1 bis 9, **dadurch gekennzeichnet, dass** ein Umschaltmittel zum Umschalten zwischen Auflichtbeleuchtung und evaneszenter Beleuchtung vorgesehen ist.

11. Mikroskop nach Anspruch 10, **dadurch gekennzeichnet, dass** Umschaltmittel einen Klappspiegel (53) umfasst.

12. Mikroskop nach einem der Ansprüche 1 bis 11, **dadurch gekennzeichnet, dass** der Lichtkegel insbesondere zur Änderung des Azimut variierbar ist.

13. Mikroskop nach einem der Ansprüche 1 bis 12, **dadurch gekennzeichnet, dass** zur Bildaufnahme eine Kamera vorgesehen ist.

14. Mikroskop nach einem der Ansprüche 1 bis 13, **dadurch gekennzeichnet, dass** das Objektiv (3) eine numerische Apertur aufweist, die größer als 1,4; insbesondere größer als 1,45; insbesondere größer 1,6 ist und die vorzugsweise 1,45 oder 1,65 beträgt.

15. Mikroskop nach einem der Ansprüche 1 bis 14, **dadurch gekennzeichnet, dass** zumindest die Lichtquelle (5) und das Einstellmittel (31) zu einem Beleuchtungsmodul (59) zusammengefasst sind.

16. Mikroskop nach Anspruch 15, **dadurch gekennzeichnet, dass** das Mikroskop ein Mikroskopstativ aufweist und dass das Beleuchtungsmodul (59) lösbar an das Mikroskopstativ ankoppelbar ist.

## Claims

1. Microscope having an objective (3), having a light source (5) which generates an illuminating light beam (9) for the evanescent illumination of a specimen (11), having a lens system (21, 23, 25, 83, 85) for focusing the illuminating light beam (9) in such a manner that the illuminating light beam (9) has a focal point (19) in the plane of the objective aperture diaphragm (15), and having an adjusting means (31) which comprises an adjustable beam-deflecting device (33) arranged in the beam path of the illuminating light beam (9), **characterised in that** the beam-deflecting device (33) is arranged on that side of the lens system (21, 23, 25, 83, 85) for focusing the illuminating light beam (9) which is remote from the objective (3), and comprises at least one rotatably or tiltably constructed mirror and/or prism for altering the spatial position of the focal point inside the plane of the objective aperture diaphragm (15).

2. Microscope according to claim 1, **characterised in that** the beam-deflecting device (33) contains at least one galvanometer mirror.

3. Microscope according to claim 1 or 2, **characterised in that** the adjusting means (31) comprises a fibre optical waveguide (69) which is arranged to be at least partly displaceable.

4. Microscope according to any one of claims 1 to 3, **characterised in that** the distance from the focal point (19) of the illuminating light beam (9) to the optical axis (35) of the objective (3) is adjustable.

5. Microscope according to any one of claims 1 to 4, **characterised in that** the adjusting means (31) can be controlled in such a manner that the focal point (19) travels continuously along a selectable trajectory inside the plane of the objective aperture diaphragm (15).

6. Microscope according to claim 5, **characterised in that** the trajectory is a circular path.

7. Microscope according to any one of claims 1 to 6, **characterised in that** a compensating lens (45) is provided for compensating for any unevenness in the objective aperture diaphragm plane (15).

8. Microscope according to any one of claims 1 to 7, **characterised in that** the microscope objective (3) is exchangeable and **in that** an adapting lens (47) is provided for adaptation to different aperture diaphragm positions.

9. Microscope according to any one of claims 1 to 8, **characterised in that** a light trap is provided for removing unused illumination light.

10. Microscope according to any one of claims 1 to 9, **characterised in that** a switching means is provided for switching between epi-illumination and evanescent illumination.

11. Microscope according to claim 10, **characterised in that** the switching means comprises a folding mirror (53).

12. Microscope according to any one of claims 1 to 11, **characterised in that** the light cone is variable especially for altering the azimuth.

13. Microscope according to any one of claims 1 to 12, **characterised in that** a camera is provided for recording images.

14. Microscope according to any one of claims 1 to 13, **characterised in that** the objective (3) has a numerical aperture which is greater than 1.4; especially greater than 1.45; especially greater than 1.6, and which is preferably 1.45 or 1.65.

15. Microscope according to any one of claims 1 to 14, **characterised in that** at least the light source (5) and the adjusting means (31) are combined to form an illumination module (59) .

16. Microscope according to claim 15, **characterised in that** the microscope has a microscope stand and **in that** the illumination module (59) can be releasably coupled to the microscope stand.

## Revendications

1. Microscope, avec un objectif (3), avec une source de lumière (5) qui génère un faisceau de rayons de lumière d'éclairage (9) pour l'éclairage évanescent d'un échantillon (11), avec un système optique (21, 23, 25, 83, 85) pour mettre au point le faisceau de rayons de lumière d'éclairage (9) de telle sorte que le faisceau de rayons de lumière d'éclairage (9) présente un foyer (19) dans le plan de la pupille d'objectif (15), et avec des moyens de réglage (31) comprenant un dispositif de déviation de rayons (33) disposé sur une trajectoire de rayons du faisceau de rayons de lumière d'éclairage (9), **caractérisé en ce que** le dispositif de déviation de rayons (33) est disposé du côté du système optique (21, 23, 25, 83, 85) détourné de l'objectif (3) pour mettre au point le faisceau de rayons de lumière d'éclairage (9) et comprend au moins un miroir et/ou un prisme réalisé(s) de façon rotative ou pivotante pour modifier la position spatiale du foyer à l'intérieur du plan de la pupille d'objectif (15).

2. Microscope selon la revendication 1, **caractérisé en ce que** le dispositif de déviation de rayons (33) comprend au moins un miroir à galvanomètre.

3. Microscope selon la revendication 1 ou 2, **caractérisé en ce que** les moyens de réglage (31) comprennent une fibre optique (69) disposée de façon au moins partiellement mobile.

4. Microscope selon l'une quelconque des revendications 1 à 3, **caractérisé en ce que** la distance entre le foyer (19) du faisceau de rayons de lumière d'éclairage (9) et l'axe optique (35) de l'objectif (3) est réglable.

5. Microscope selon l'une quelconque des revendications 1 à 4, **caractérisé en ce que** les moyens de réglage (31) peuvent être pilotés de telle sorte que le foyer (19) parcourt en continu une portion de trajectoire sélectionnable à l'intérieur du plan de la pupille d'objectif (15).

6. Microscope selon la revendication 5, **caractérisé en ce que** la portion de trajectoire est une trajectoire circulaire.

7. Microscope selon l'une quelconque des revendications 1 à 6, **caractérisé en ce qu'**un système optique de compensation (45) est prévu pour compenser des irrégularités du plan de pupille d'objectif (15).

8. Microscope selon l'une quelconque des revendications 1 à 7, **caractérisé en ce que** l'objectif de microscope (3) est échangeable et qu'un système optique d'adaptation (47) est prévu pour une adaptation à différentes positions de pupille.

9. Microscope selon l'une quelconque des revendications 1 à 8, **caractérisé en ce qu'**un piège de lumière est prévu pour éliminer la lumière d'éclairage non utilisée.

10. Microscope selon l'une quelconque des revendications 1 à 9, **caractérisé en ce que** des moyens de commutation sont prévus pour commuter entre un éclairage incident et un éclairage évanescent.

11. Microscope selon la revendication 10, **caractérisé en ce que** des moyens de commutation comprennent un miroir basculant (53).

12. Microscope selon l'une quelconque des revendications 1 à 11, **caractérisé en ce que** le cône de lumière est variable en particulier pour modifier l'azimut.

13. Microscope selon l'une quelconque des revendications 1 à 12, **caractérisé en ce qu'**une caméra est prévue pour la prise de vues.

14. Microscope selon l'une quelconque des revendications 1 à 13, **caractérisé en ce que** l'objectif (3) présente une ouverture numérique qui est supérieure à 1,4 ; en particulier supérieure à 1,45 ; en particulier supérieure à 1,6 et qui est de préférence de 1,45 ou 1,65.

15. Microscope selon l'une quelconque des revendications 1 à 14, **caractérisé en ce qu'**au moins la source de lumière (5) et les moyens de réglage (31) sont regroupés en un module d'éclairage (59).

16. Microscope selon la revendication 15, **caractérisé en ce que** le microscope présente un pied de microscope et **en ce que** le module d'éclairage (59) peut être couplé de façon amovible au pied de microscope.
